(19) Europäisches Patentamt / European Patent Office / Office européen des brevets

(11) **EP 2 436 894 B1**

(12) **EUROPEAN PATENT SPECIFICATION**

(45) Date of publication and mention
of the grant of the patent:
**04.11.2015 Bulletin 2015/45**

(51) Int Cl.:
***F01N 11/00*** *(2006.01)*          ***F01N 9/00*** *(2006.01)*
***F02D 41/02*** *(2006.01)*          ***F02D 41/14*** *(2006.01)*

(21) Application number: **11183332.3**

(22) Date of filing: **29.09.2011**

(54) **Exhaust emission control device**

Abgasemissionssteuervorrichtung

Dispositif de contrôle d'émission d'échappement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2010 JP 2010224016**

(43) Date of publication of application:
**04.04.2012 Bulletin 2012/14**

(73) Proprietor: **Mitsubishi Jidosha Kogyo Kabushiki
Kaisha
Tokyo 108-8410 (JP)**

(72) Inventors:
 • **Kawashima, Kazuhito**
   **Tokyo, 108-8410 (JP)**
 • **Tashiro, Keisuke**
   **Tokyo, 108-8410 (JP)**
 • **Tsuda, Masahiro**
   **Tokyo, 108-8410 (JP)**
 • **Hashimoto, Takaharu**
   **Tokyo, 108-8410 (JP)**

(74) Representative: **Vossius & Partner
Patentanwälte Rechtsanwälte mbB
Siebertstrasse 3
81675 München (DE)**

(56) References cited:
**EP-A1- 2 034 145          DE-A1-102007 000 342
DE-A1-102009 001 671**

**Description**

The present invention relates to an exhaust emission control device provided in an exhaust path from an engine.

One of the known control devices for removing particulate matter (hereinafter referred to as PM) contained in exhaust gas of an engine is a diesel particulate filter: hereinafter referred to as filter). Some vehicles include a filter on an exhaust path that performs mandatory regeneration control for removing the PM accumulated in the filter. The mandatory regeneration control refers to control for incinerating the PM on the filter, while mandatorily raising the temperature of the filter. Examples for raising the temperature of the filter include heating of the filter by a heater or any other heating means and heating of the exhaust gas by the heat generated through combustion of hydrocarbon (unburned fuel, HC) or other fuel supplied to an oxidation catalyst upstream of the filter.

The heat value by the combustion of the PM during the mandatory regeneration control increases with an increase in the amount of the PM accumulated in the filter. Furthermore, an elevated temperature of the filter enhances the oxidative reactivity of the PM and thus increases the cleanup rate of the filter. Excess heating of the filter however will increase the probability of undesirable meltdown or breakage of the filter. A proposed countermeasure against such a disadvantage is a cleanup technique of the filter without meltdown of the filter by monitoring the exhaust temperature with a thermosensor provided downstream of the filter.

For example, Japanese Patent No. 3884947 discloses a technique for detecting the temperature of exhaust gas passing through a peripheral portion of a filter and the temperature of the exhaust gas at an outlet of a filter case, and determining the excess temperature based on these temperatures. This technique involves presumption of the temperature of the exhaust gas passing through the core portion of the filter from these two temperatures, which are measured downstream of the filter. Excess temperature rise is estimated in the case where the temperature of the exhaust gas at the peripheral portion and the core portion of the filter exceeds a predetermined threshold. The patent states that the meltdown of the filter can be reliably determined.

The temperature of the exhaust gas of the peripheral portion of the filter is detected by a single sensor in the technique disclosed in Japanese Patent No. 3884947, under assumption that the temperature of the exhaust gas passing through the filter has an approximately isotropic distribution with respect to the central axis of the filter. However, the temperature distribution in the filter is not always isotropic to the central axis of the filter, and deviates by various factors, such as the shape and the position of connection of the exhaust path connected upstream of the filter, the shape of the filter, the shape of a casing, the flow velocity distribution, and the resistance (friction) of a flow path.

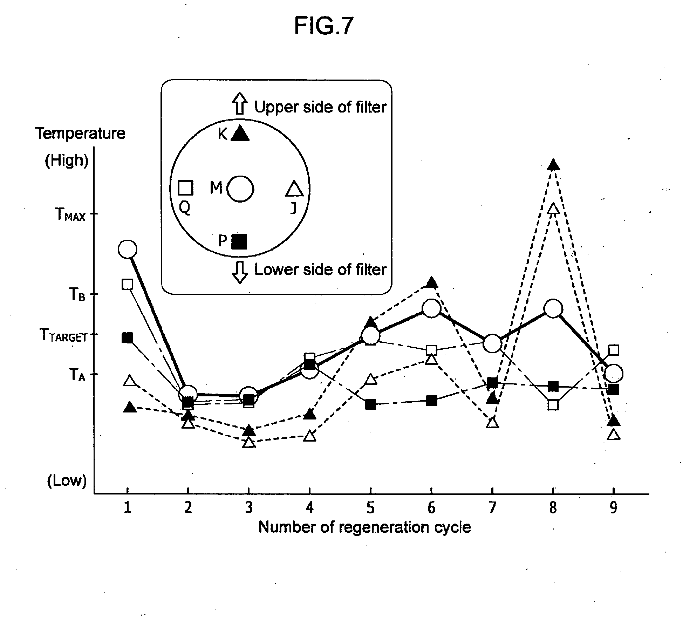

FIG. 7 is a graph of the transitional temperature distribution in the filter after simulation of running conditions of a vehicle and the mandatory regeneration control. The maximum temperature detected by each of the thermosensors during the mandatory regeneration control is measured using a filter provided with the thermosensors placed at different places in a cross-sectional surface in a radial direction, as illustrated in the introductory notes in FIG. 7. The maximum temperature of each thermosensor is plotted every regeneration cycle. The white-circle plot M illustrated in FIG. 7 indicates a temperature transition of the core portion (core portion of the filter) in the cross-sectional surface in the radial direction. A plot K shown by black triangles indicates the temperature of an upper end of a periphery of the filter. The plot P shown by black squares indicates the temperature at the bottom end of the periphery of the filter. Furthermore, a plot J shown by white triangles indicates the temperature at the left side of a downstream position of an exhaust flow, and a plot Q shown by white squares indicates the temperature at the right side of the downstream position of the exhaust flow.

This graph demonstrates that the maximum temperatures during the first to third mandatory regeneration cycles are detected at the center (plot M) of the filter, while the maximum temperature during the fourth mandatory regeneration cycle is detected at the right side (plot Q) of the filter. Furthermore, the maximum temperatures during the fifth and sixth mandatory regeneration cycles are detected at the upper end (plot K) of the filter. As described above, the temperature distribution in the filter is anisotropic with respect to the central axis of the filter. Accordingly, the temperature of a portion that reaches the maximum temperature in the temperature of exhaust gas at the peripheral portion of the filter cannot be detected by a single sensor in some cases. This result precludes accurate determination of the excess temperature rise.

In addition to anisotropy with respect to the central axis of the filter, the temperature distribution in the filter has a deviation that dynamically varies. For example, the positions at which the maximum temperature is detected in the graph illustrated in FIG. 7 irregularly shift every mandatory regeneration control at the fourth cycle and afterward. That is, the deviation of the temperature distribution in the filter is not constant but dynamically varies. Accordingly, the sensor fixed on the periphery just downstream of the filter disclosed in Japanese Patent No. 3884947 cannot accurately detect such a dynamic variation in the temperature distribution in the filter. This precludes accurate determination of the excess temperature rise.

Furthermore, the temperature distribution of the peripheral portion of the filter has a long-period variation. That is, as illustrated in FIG. 7, during the mandatory regeneration at the first to seventh and ninth cycles, a difference between the temperature of the core portion of the filter and the maximum temperature is relatively small, while the difference between the temperature at the core portion of the filter and the maximum temperature is significantly increased at the eighth mandatory regeneration cycle. Such an excess temperature rise at the peripheral portion of the filter does not always appear during all the mandatory regeneration cycles and thus the occurrence of the excess temperature rise cannot be readily predicted.

A possible countermeasure to solve these problems is an increased number of temperature-measuring points by concentrically arranged sensors on the periphery just downstream the filter for accurately sensing the variation of the distribution of the exhaust temperature passing through the peripheral portion of the filter, as disclosed in JP-A-2007-332911 or EP 2 034 145 A1. This however requires spaces for the additional sensors and wiring around the filter, in addition to an increased sensor cost depending on the number of temperature-measuring points. Furthermore, it is not practical in layout.

An object of the present invention for solving the problems described above is to provide a highly reliable exhaust emission control device that can exactly sense an excess temperature rise in a vertical cross-sectional surface in a filter using a minimal number of sensors regardless of the position of the excess temperature rise.
In addition to this object, the exhaust emission control device has further advantages introduced by each configuration illustrated in preferred embodiments of the invention, which cannot be achieved by the related art.

Thus, the object above can be achieved by the features specified in the claims. Particularly,

(1) An exhaust emission control device disclosed herein includes a filter provided in an exhaust path of an engine, and collecting particulate matter in exhaust gas, and a proximal thermosensor provided in proximity to downstream end surface of a core portion of a cross-sectional surface in a radial direction of the filter and that detects a proximal temperature of the exhaust gas that passed through the core portion.

The exhaust emission control device further includes an entire-area thermosensor that detects the temperature of a mixture of a first exhaust gas stream that passed through the peripheral portion and a second exhaust gas stream that passed through the core portion in a cross-sectional surface in a radial direction of the filter, and calculating means that calculates a peripheral temperature of the peripheral portion of the filter, based on the proximal temperature detected by the proximal thermosensor and an entire-area temperature detected by the entire-area thermosensor.

The peripheral temperature described herein refers to estimated temperature corresponding to the maximum temperature in the temperatures of the exhaust passing through the peripheral portion. When a local temperature rise occurs at the peripheral portion (e.g., if temperature distribution at the peripheral portion is non-uniform), the exhaust gas streams each having a heat quantity are mixed downstream of the filter regardless of the position of the temperature rise, and the entire-area temperature rises. In contrast, if the local temperature rise does not occur at the peripheral portion (e.g., if temperature distribution at the peripheral portion is uniform), such no entire-area temperature is observed. Accordingly, the local temperature rise can be detected and determined at the peripheral portion based on the degree of a temperature rise from the proximal temperature to the entire-area temperature.

The calculation means may calculate the temperature of the periphery based on a difference between the proximal temperature and the entire-area temperature. Alternatively, the calculation means may calculate the temperature of the periphery based on the ratio of the proximal temperature to the entire-area temperature. Furthermore, the calculation means may calculate the temperature of the periphery using a map that depicts the relationship among the proximal temperature, the entire-area temperature, and the amount of the temperature rise

(2) It is preferable that the calculating means increases the calculated peripheral temperature with a decrease in a value produced by the subtraction of the entire-area temperature from the proximal temperature.

(3) It is preferable that the exhaust emission control device further includes exhaust flow calculating means that calculates the volume of the exhaust gas passing through the exhaust path, and the calculating means increases the calculated peripheral temperature with an increase in the volume of the flowing exhaust gas calculated by the exhaust flow calculating means.

(4) The calculating means includes central-temperature calculating means that calculates a central temperature of the core portion of the filter based on the proximal temperature, peripheral temperature calculating means that calculates the peripheral temperature based on the central temperature, the proximal temperature, and the entire-area temperature. In this case, the calculating means preferably includes regeneration controlling means that sets an interval for regenerating the filter based on a higher temperature of the central temperature calculated by the central-temperature calculating means and the peripheral temperature calculated by the peripheral-temperature calculating means.

(5) It is preferable that the exhaust emission control device further includes malfunction determining means that determines malfunction occurring at the core portion if the central temperature calculated by the central temperature calculating means exceeds a predetermined temperature and malfunction occurring at the peripheral portion if the peripheral temperature calculated by the peripheral-temperature calculating means exceeds a predetermined temperature.

(6) The exhaust emission control device may further include a truncated cone provided on a downstream end of a casing accommodating the filter and arranged conversely toward a downstream side, and a downstream exhaust path connected to the truncated cone. In this case, it is preferable that the entire-area thermosensor is disposed in the center in a cross-section in a radial direction of the downstream exhaust path in the vicinity of a connecting portion of the truncated cone and the downstream flow path.

According to the disclosed exhaust emission control device, the maximum temperature in the filter can be accurately calculated by comparison of the entire-area temperature reflecting the temperature of the exhaust gas that passed through the periphery of the filter and the proximal temperature reflecting the temperature of the exhaust gas that passed through the core portion of the filter. Consequently, the local temperature rise at the peripheral portion of the filter can be sensed regardless of its position. This improves the reliability of the exhaust emission control system.

The nature of this invention, as well as other objects and advantages thereof, will be explained in the following with reference to the accompanying drawings, in which like reference characters designate the same or similar parts throughout the figures and wherein:

FIG. 1 is a block diagram illustrating a configuration of an exhaust emission control device according to an embodiment;

FIG. 2(a) is a cross-sectional view of a filter illustrating an arrangement of sensors of the exhaust emission control device;

FIG. 2 (b) is an elevational view of a filter illustrating the arrangement of the sensors of the exhaust emission control device;

FIG. 3 is an example graph illustrating a calculation in the exhaust emission control device;

FIG. 4 is an example graph used in a mandatory regeneration control of the exhaust emission control device;

FIG. 5 is a flowchart illustrating the control in the exhaust emission control device;

FIG. 6 (a) is a graph for explaining the control operation of the exhaust emission control device, and an example distribution of the temperature in the case where a local excess temperature rise does not occur;

FIG. 6 (b) is a graph for explaining the control operation of the exhaust emission control device, and an example distribution of the temperature in the case where a local excess temperature rise occurs at the peripheral portion of the filter; and

FIG. 7 is a graph illustrating a variation in the distribution of the temperature in the filter during the mandatory regeneration control.

A control device of an engine will be described with reference to the drawings. Note that embodiments described below are only for exemplification and should not be construed to exclude various modifications and technologies that are not described in the following embodiments.

[1. Configuration of Device]

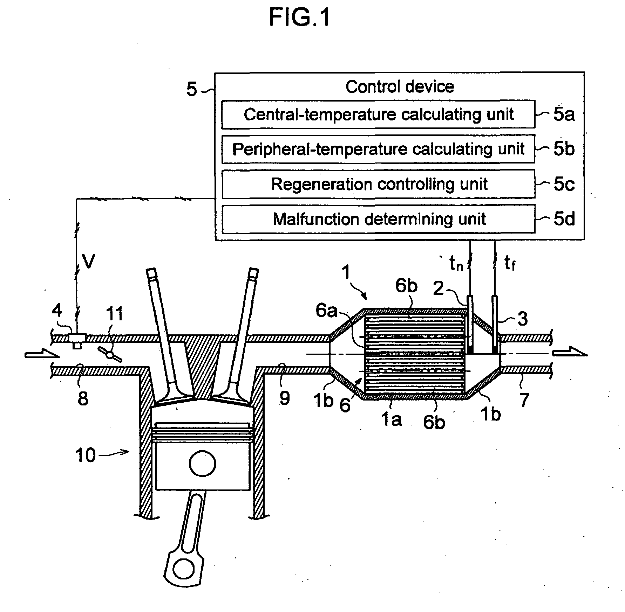

An exhaust emission control device according to the embodiment is applied to a vehicle onboard engine 10 illustrated in FIG. 1. Herein, one cylinder among a plurality of cylinders provided in a multi-cylinder four-stroke cycle engine 10 is illustrated. At its top, the cylinder is connected to an intake air path 8 for introducing the air into a combustion chamber and an exhaust path 9 for discharging the exhaust gas after combustion to the exterior of the vehicle.

The intake air path 8 is provided with an airflow sensor 4 and a throttle valve 11. The throttle valve 11 can adjust the amount of intake air introduced into the cylinder by a variable opening. Furthermore, the airflow sensor 4 can detect the volume of intake air introduced into the cylinder. That is, it determines the volume of intake air V passing through the throttle valve 11. The volume of intake air V detected herein is transmitted to a control device 5 described below.

A DPF 1 is disposed in the exhaust path 9. The DPF 1 is a filtering device including a filter 6 fixed in a casing for collecting the PM in the exhaust gas. The filter 6 is composed of a porous material and has two functions, i.e., collecting the PM contained in the exhaust gas and removing the collected PM by oxidization (for example, a ceramic filter made of silicon carbide or cordierite). The inside of the filter 6 is divided along the direction of the flowing exhaust gas by porous walls into a plurality of segments, and a large number of fine pores having a size corresponding to the particle diameter of the PM are formed in the walls. The PM is collected in or on the walls when the exhaust gas passes through the vicinity or the inside of the walls and is filtered out from the exhaust gas.

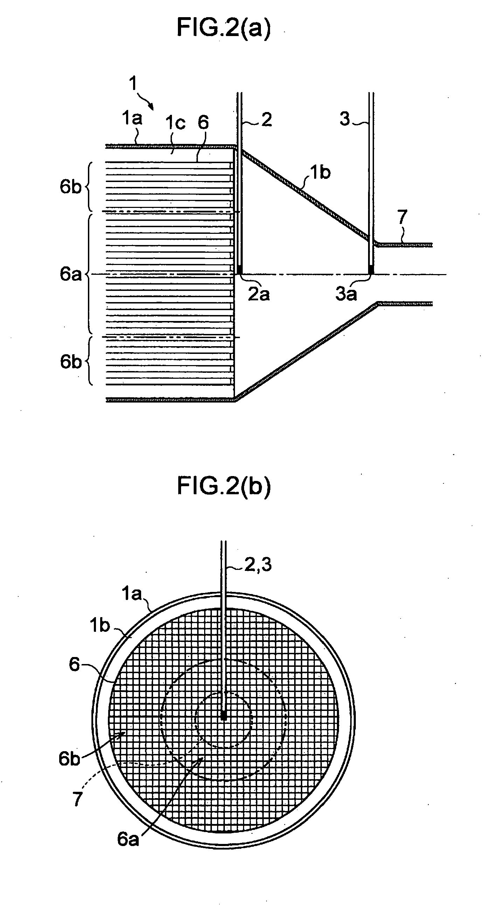

As illustrated in FIGs. 2 (a) and 2 (b) , the casing of the DPF 1 includes a hollow cylindrical portion 1a and hollow truncated cones 1b each fixed to an end of the cylindrical portion 1a. The cylindrical portion 1a holds the cylindrical filter 6 therein by a support member 1c. The filter 6 is fixed to a position such that the axis of the cylindrical filter 6 is aligned to the axis of the cylindrical portion 1a. The cross-sectional area of the filter 6 (the area surrounded by the peripheral surface of the filter 6 cut vertical to the direction of the flowing exhaust gas) is larger than the flow path cross-sectional area of the exhaust path 9 or the flow path cross-sectional area of the downstream exhaust path 7.

Hereinafter, a region close to the core of the cross-sectional surface in the radial direction of the filter 6 is referred to as "filter core 6a", and a region close to the outer edges of the filter is referred to as "filter periphery 6b". The boundary of the filter core 6a and the filter periphery 6b is, as indicated by chain double-dashed lines in FIGs. 2(a) and 2(b), is expressed as a cylindrical surface of a cylinder having a radius smaller than that of the filter 6, the cylinder being arranged such that the axis thereof is aligned with the axis of the cylindrical filter 6.

The cone 1b is provided at least on the downstream end surface of the cylindrical portion 1a. Preferably, another cone 1b is provided on the upstream end of the cylindrical portion 1a, as illustrated in FIG. 1. The cylindrical portion 1a is expanded relative to the exhaust path 9 and the downstream exhaust path 7, and the cone 1b connects these streams having different diameters. In order to reduce the path resistance (friction) of the exhaust gas, the cone 1b may have a bell-mouth shape (a shape of hollow rotor having a cylindrical surface smoothly flaring or tapering).

The upstream cone 1b connects the exhaust path 9 and the cylindrical portion 1a, and the downstream cone 1b connects the cylindrical portion 1a and the downstream exhaust path 7. The downstream cone 1b is arranged conversely toward a downstream side, as illustrated in FIG. 2(a). That is, a large opening side (bottom side) of the downstream cone 1b is connected to the cylindrical portion 1a while a small opening side (top side) is connected to the downstream exhaust path 7. The central axis of the flow path in the downstream cone 1b is fixed to a position that matches the central axis of the flow path of the downstream exhaust path 7 and the axis of the cylindrical portion 1a. Hereinafter, the central axis of the flow path in the downstream cone 1b is referred to as central axis simply. The central axis of the cone 1b, the central axis of the flow path of the downstream exhaust path 7, and the axis of the cylindrical portion 1a are not necessarily aligned with each other.

As illustrated in FIG. 2(a), a proximal thermosensor 2 and an entire-area thermosensor 3 are disposed inside the downstream cone 1b. The proximal thermosensor 2 is a thermocouple sensor provided in proximity to an end surface on the downstream side of the filter core 6a. The proximal thermosensor 2 is a thermocouple having a tip 2a that detects the temperature of the exhaust gas passing through the filter core 6a. The temperature-measuring point by the proximal sensor 2 (namely, the position of the tip 2a of the proximal thermosensor 2) is immediately downstream of the filter 6, and the center of the core portion 6a of the filter. As illustrated in FIG. 2 (b) , the proximal thermosensor 2 is arranged such that the tip 2a is in contact with the central axis of the cone 1b. Hereinafter, the exhaust temperature detected by the proximal sensor 2 is referred to as "proximal temperature $t_n$." Information of the proximal temperature $t_n$ is transmitted to a control device 5 described below.

The entire-area thermosensor 3 is a thermocouple sensor that detects the temperature of a mixture of a first exhaust stream that passed through the filter core 6a and a second exhaust gas stream that passed through the filter periphery 6b, at its tip 3a. A temperature-measuring point by the entire-area thermosensor 3 (i.e., the position of the tip 3a of the entire-area thermosensor 3) resides in the vicinity of the connecting portion of the downstream cone 1b and the downstream exhaust path 7 and in the center of the filter core 6a. As illustrated in FIG. 2 (b) , the entire-area thermosensor 3 is also arranged such that its tip 3a is in contact with the central axis of the downstream cone 1b. Hereinafter, the exhaust temperature detected by the entire-area thermosensor 3 is called "entire-area temperature $t_f$". Information of the entire-area temperature $t_f$, as well as the proximal temperature $t_n$, is also transmitted to the control device 5.

The position of the tip 2a of the proximal thermosensor 2 is preferably set to a position close to the filter 6 as long as the proximal thermosensor 2 is not influenced by the exhaust temperature at the filter periphery 6b. On the other hand, it is preferable that the entire-area thermosensor 3 is set to a position where the first exhaust gas stream passing through (that has passed through) the filter core 6a and the second exhaust gas stream passing through (that has passed through) the filter periphery 6b are mixed. Heat loss to the exterior from the downstream cone 1b and the downstream exhaust path 7, however, increases with an increase in the distance from the filter 6, which precludes accurate measurement of the temperature of the mixed exhaust stream. Furthermore, such a heat loss to the exterior is more noticeable on the outer edges of the downstream cone 1b and the downstream exhaust path 7. Accordingly, it is preferable that the entire-area thermosensor 3 is set to a position as close to the filter 6 as possible in an area where the first exhaust gas stream passing through (that has passed through) the filter core 6a and the second exhaust gas stream passing through (that has passed through) the filter periphery 6b are mixed. Alternatively, the entire-area thermosensor 3 is preferably set to a position as close to the center of the exhaust flow path as possible.

In this embodiment, the entire-area thermosensor 3 is arranged in the vicinity of the outlet (in the vicinity of the connecting portion of the downstream cone 1b and the downstream exhaust path 7) of the downstream cone 1b, which has a reduced diameter from the cylindrical portion 1a toward the downstream exhaust path 7. Thus, the temperature of the exhaust gas that is properly mixed can be accurately measured, while the heat loss described above is reduced.

The DPF 1 in this embodiment performs the mandatory regeneration control in which the PM is mandatorily burnt by elevating the temperature of the filter 6 at regular intervals during the drive of the vehicle. Any technique can be applied for raising the temperature of the filter 6, for example, heating the filter 6 by the heat generated by combustion of hydrocarbon (unburned fuel, HC) or other fuel supplied to an oxidation catalyst disposed upstream of the filter 6; or heating the filter 6 by a heater or any other heating means. The mandatory regeneration control of the filter 6 is performed by the control device 5.

[2. Configuration of Control Device]

The control device 5 (calculation means) is an electronic control device that performs overall management for an intake and exhaust air system including the engine 10. The control device 5 is composed of, for example, an LSI device or a built-in electronic device in which a microprocessor, a ROM, a RAM, and other computer hardware are integrated. The control device 5 performs estimation calculations of the filter temperature of the filter core 6a and that of the filter periphery 6b, in addition to the above-described mandatory regeneration control. The interval of the mandatory regeneration control (interval of regenerating the filter) is adjusted based on these temperatures.

In order to perform the above-described control operations, the control device 5 includes a central-temperature calculating unit 5a (central-temperature calculating means), a peripheral-temperature calculating unit 5b (peripheral-temperature calculating means, exhaust flow calculating means), a regeneration controlling unit 5c (regeneration controlling means), and a malfunction determining unit 5d (malfunction determining means). The functions of the central-temperature calculating unit 5a, the peripheral-temperature calculating unit 5b, the regeneration controlling unit 5c, and the malfunction determining unit 5d may be achieved by an electronic circuit (hardware) or by software. Alternatively, these functions may be achieved partially by hardware and the rest of the functions may be achieved by software.

The central-temperature calculating unit 5a performs the estimation calculation of the temperature of the filter core 6a (central temperature $T_c$), based on the proximal temperature $t_n$ detected by the proximal thermosensor 2. For example, the correspondence between the proximal temperature $t_n$ and the central temperature $T_c$ is previously sensed through an experiment, an examination, or any other inspection, and the central temperature $T_c$ is estimated using this correspondence. Alternatively, the central temperature $T_c$ may be estimated based on the proximal temperature $t_n$ and the volume $V_{EX}$ of exhaust gas passing through the filter 6 that is estimated from the volume of intake air V detected by the airflow sensor 4. Information of the estimated central temperature $T_c$ is transmitted to the peripheral-temperature calculating unit 5b, the regeneration controlling unit 5c, and the malfunction determining unit 5d.

The peripheral-temperature calculating unit 5b estimates the filter temperature of the filter periphery 6b (peripheral temperature $T_o$) based on the central temperature $T_c$ that is calculated by the central-temperature calculating unit 5a, the proximal temperature $t_n$ that is detected by the proximal thermosensor 2, and the entire-area temperature $t_f$ that is detected by the entire-area thermosensor 3. First, a deviation $\Delta t$ of the detected values (indicated value) of the proximal thermosensor 2 and the entire-area thermosensor 3 is calculated in accordance with the following formula 1.

$$\Delta t = t_n - t_f \qquad \text{Formula 1}$$

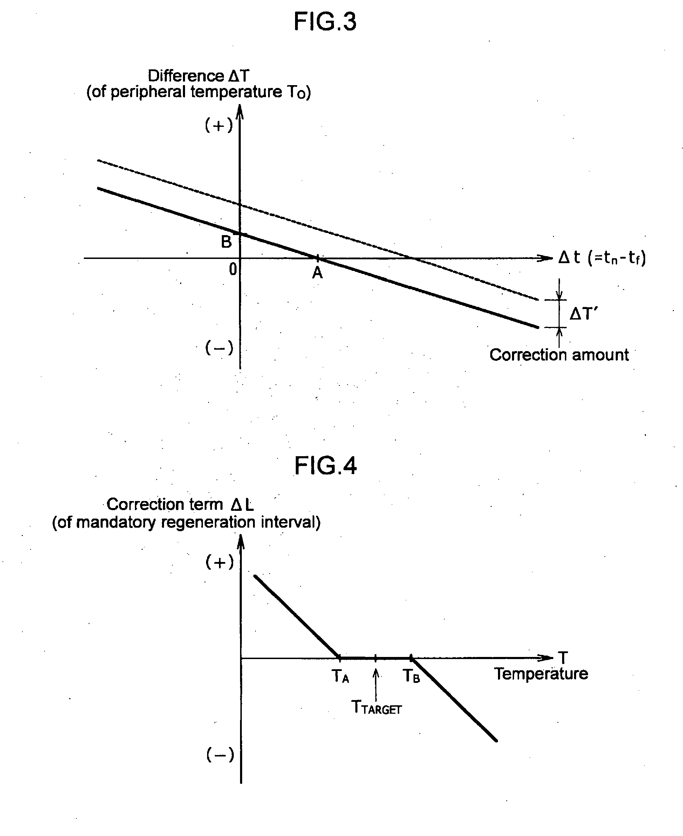

The peripheral-temperature calculating unit 5b calculates the difference $\Delta T$ between the peripheral temperature To and the central temperature $T_c$ from a table or a map containing the deviation $\Delta t$ serving as an argument. For example, the correspondence between the deviation $\Delta t$ and the difference $\Delta T$ is previously determined through an experiment, an examination, or any other inspection, and the difference $\Delta T$ is calculated using this correspondence. A graph illustrated by a solid line in FIG. 3 represents the difference $\Delta T$ as a linear function of the deviation $\Delta t$, and the difference $\Delta T$ takes a positive value B if the deviation $\Delta t$ is zero, while the difference $\Delta T$ is zero if the deviation $\Delta t$ is a positive value A.

The deviation $\Delta t$ is obtained by subtracting the entire-area temperature $t_f$ from the proximal temperature $t_n$, and the entire-area temperature $t_f$ is the temperature of a mixture of the first exhaust gas stream that passed through the filter core 6a and the second exhaust gas stream that passed through the filter periphery 6b. Accordingly, the deviation $\Delta t$ decreases with an increase in the peripheral temperature To, and vice versa. In other words, the difference $\Delta T$ increases with a decrease in the deviation $\Delta t$, and vice versa. Accordingly, the specific correspondence between the deviation $\Delta t$ and the difference $\Delta T$ is not limited to the linear correspondence illustrated by the solid line in FIG. 3, and it is preferable that the difference $\Delta T$ decreases with at least an increase in the deviation $\Delta t$.

Next, the peripheral-temperature calculating unit 5b estimates the volume $V_{EX}$ of the exhaust gas passing through the filter 6 from the volume of intake air V detected by the airflow sensor 4 and calculates a correction amount $\Delta T'$ for performing additional correction for the peripheral temperature To in response to the volume $V_{Ex}$ of the exhaust gas. For example, for a relatively small influence of a heat loss from a casing of the filter 6, the deviation $\Delta t$ increases with an increase in the volume $V_{EX}$ of the exhaust gas. Accordingly, it is preferable that the correction amount $\Delta T'$ increases with an increase in the volume $V_{Ex}$ of the exhaust gas, as indicated by a broken line in FIG. 3.

Although the peripheral-temperature calculating unit 5b functions as the volume of the exhaust calculation means for calculating the volume $V_{Ex}$ of the exhaust gas, a calculation unit for calculating the volume $V_{Ex}$ of the exhaust gas from the volume of intake air V detected by the airflow sensor 4 may be separately provided, or the central-temperature calculating unit 5a may have such a function.

Thereafter, the peripheral-temperature calculating unit 5b totalizes the central temperature $T_c$, the difference $\Delta T$, and the correction amount $\Delta T'$ in accordance with the following formula 2 and calculates the peripheral temperature To. Information of the peripheral temperature To calculated is transmitted to the regeneration controlling unit 5c and the malfunction determining unit 5d.

$$T_O = T_c + \Delta T + \Delta T' \qquad Formula\ 2$$

Another possible means for calculating the peripheral temperature $T_o$ is as follows: The sum of the difference $\Delta T$ and the correction amount $\Delta T'$ is defined as a total correction amount $\Delta T_T$, and the correspondence of the deviation $\Delta t$, the volume $V_{EX}$ of the exhaust gas, and the total correction amount $\Delta T_T$ is previously determined through an experiment, an examination, or any other inspection. In this case, it is preferable that the correspondence of the deviation $\Delta t$, the volume $V_{EX}$ of the exhaust gas, and the total correction amount $\Delta T_T$ is stored in the peripheral-temperature calculating unit 5b in the form of a three-dimensional map, that the total correction amount $\Delta T_T$ is determined from the correspondence, and that the peripheral temperature $T_o$ is calculated in accordance with the following formula 3.

$$T_O = T_c + \Delta T_T \qquad Formula\ 3$$

The regeneration controlling unit 5c performs the mandatory regeneration control of the DPF 1. The regeneration controlling unit 5c calculates the amount of the PM accumulated in the filter 6, for example. If the amount of the PM exceeds a predetermined level, the regeneration controlling unit 5c performs the mandatory regeneration control. Alternatively, the regeneration controlling unit 5c calculates the cumulative running distance of a vehicle, and the regeneration controlling unit 5c performs the mandatory regeneration control when the cumulative running distance from the last mandatory regeneration control exceeds a predetermined distance. The mandatory regeneration control is completed after the amount of the burnt PM on the filter 6 reach a predetermined amount (for example, substantially all the PMs are determined to be burnt), or after the filter 6 is kept at a predetermined temperature or more for a predetermined time period.

Furthermore, the regeneration controlling unit 5c sets an interval to the next mandatory regeneration control (an interval between the current mandatory regeneration control and the next mandatory regeneration control) based on a higher temperature of the central temperature $T_c$ calculated by the central-temperature calculating unit 5a and the peripheral temperature To calculated by the peripheral-temperature calculating unit 5b, during the current mandatory regeneration control. Herein, the interval decreases as the higher temperature of the central temperature $T_c$ or the peripheral temperature To increases, and vice versa.

For example, a map that defines the correspondence of the temperature T and the correction term $\Delta L$ of the interval is stored in the regeneration controlling unit 5c. In an example illustrated in FIG. 4, the correction term $\Delta L$ increases with a decrease in the temperature T in the case where the temperature T is less than a first temperature $T_A$. In the case where the temperature T is equal to a second temperature $T_B$ or more (provided that $T_A < T_B$), the correction term $\Delta L$ decreases with an increase in the temperature T. In the case where the temperature T is equal to the first temperature $T_A$ or more and less than the second temperature $T_B$, the correction term $\Delta L$ is zero. That is, at higher temperature T, the possibility of excess accumulation of the PM or the excess temperature rise increases somewhere in the cross-sectional surface in the radial direction of the filter 6. Accordingly, the interval is reduced by reducing the correction term $\Delta L$ and the mandatory regeneration control is expedited to prevent the excess temperature rise of the next mandatory regeneration control.

Actual adjustment of the interval depends on the actual mandatory regeneration control. For example, in mandatory regeneration control performed after the amount of the PM accumulated in the filter 6 exceeds a predetermined amount, the interval can be increased or decreased by increasing or reducing the predetermined amount contained in the start conditions of the mandatory regeneration control by the correction term $\Delta L$. In mandatory regeneration control performed after the cumulative running distance from the last mandatory regeneration exceeds a predetermined distance, the interval can be increased or decreased by increasing or reducing the predetermined distance relating to the start conditions by the correction term $\Delta L$.

The first temperature $T_A$ and the second temperature $T_B$ may be set to sandwich a standard filter temperature $T_{TARGET}$ during the mandatory regeneration control of the filter 6 as illustrated in FIG. 4. For example, if the filter temperature $T_{TARGET}$ that can achieve a desirable PM combustion efficiency during the mandatory regeneration control of the filter 6 is about 800°C, the first temperature $T_A$ is set within the range of about 600°C to about 750°C and the second temperature $T_B$ is set within the range of about 820°C to about 900°C. Thus, the filter temperature of the next mandatory regeneration control cycle can readily converge in the vicinity of the standard filter temperature $T_{TARGET}$ with ease.

The malfunction determining unit 5d determines the occurrence and position of the meltdown or malfunction of the filter 6, in the cross-sectional surface of the radial direction of the filter 6. For example, the malfunction determining unit 5d determines the occurrence of the meltdown or the malfunction in the filter core 6a if the central temperature $T_c$ calculated by the central-temperature calculating unit 5a reaches a predetermined allowable temperature $T_{MAX}$, during the mandatory regeneration control, and stores the results in a memory (not shown). Moreover, the malfunction determining unit 5d determines the occurrence of the meltdown or malfunction in the filter periphery 6b if the peripheral temperature To calculated by the peripheral-temperature calculating unit 5b reaches the allowable temperature $T_{MAX}$, and stores the results in a memory (not shown).

In contrast, if both the central temperature $T_c$ and the peripheral temperature To are less than the allowable temperature $T_{MAX}$, the malfunction determining unit 5d determines a normal state without meltdown or malfunction of the filter 6. The value of the allowable temperature $T_{MAX}$ is set above the second temperature $T_B$ (for example, 1000°C).

[3. Flowchart]

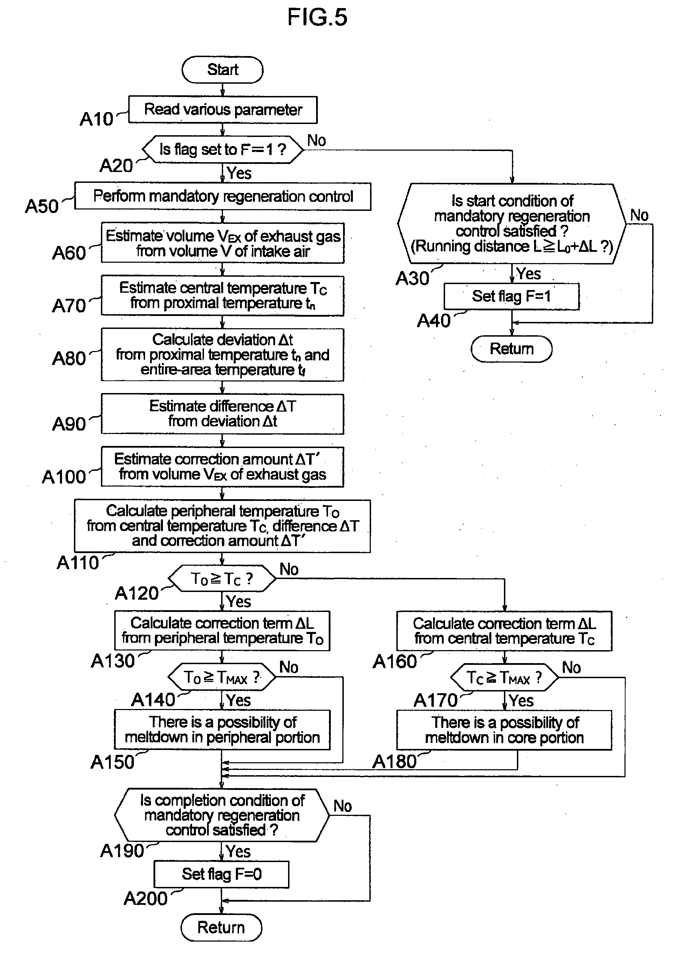

The flowchart in FIG. 5 illustrates control with respect to the calculation of the peripheral temperature To, the adjustment of the interval, and the determination of the malfunction in the control device 5. In this flowchart, a flag F for control is used. The flag F indicates the state of the mandatory regeneration control; "F = 1" is set during mandatory regeneration control, or "F = 0" is set out of the mandatory regeneration control. The default value of the flag F is set to "F = 0". Furthermore, the processing of the flow is repeated inside the control device 5.

In step A10, information including the proximal temperature $t_n$ detected by the proximal thermosensor 2, the entire-area temperature $t_f$ detected by the entire-area thermosensor 3, and the volume of intake air V detected by the airflow sensor 4 are read in the control device 5. In step A20, the control device 5 judges whether the mandatory regeneration control is in execution or not on the basis of the flag F. If the flag F is being set to "F = 1" indicating the mandatory regeneration control, then the program proceeds to step A50 while if the flag F is being set to "F # 1" (i.e., F = 0), the program proceeds to step A30.

In step A30, it is determined whether the start condition of the mandatory regeneration control is satisfied in the regeneration controlling unit 5c. For example, in the case where the control cycle of the mandatory regeneration is set based on the cumulative running distance from the last mandatory regeneration control, it is determined that the cumulative running distance L reaches a value which is the sum of the correction term $\Delta L$ and a predetermined distance $L_0$ (for example, several hundred kilometers). The correction term $\Delta L$ is a value set in steps A150 or A180 to extend or reduce the interval between the mandatory regeneration control operations.

If the start condition is satisfied, the program proceeds to step A40, the flag F is set to "F = 1", and the flow is completed. In this case, the flag will be determined to be "F = 1" in the step A20 in the next control cycle, and the program will proceed to step A50. On the other hand, if the start condition is not satisfied in step A30, the flag F is kept at "F = 0" until the start condition is satisfied.

In step A50, the regeneration controlling unit 5c performs the mandatory regeneration control to burn the PM on the filter 6 by mandatorily heating the temperature of the filter 6. In successive steps A60 to A110, the estimation on the filter temperature is performed based on various types of information read in step A10. First, in step A60, the peripheral-temperature calculating unit 5b estimates the volume $V_{EX}$ of the exhaust gas passing through the filter 6 based on the volume of intake air V detected by the airflow sensor 4. In step A70, the central-temperature calculating unit 5a estimates the central temperature $T_c$ of the filter core 6a based on the proximal temperature $t_n$ detected by the proximal thermosensor 2.

In step A80, the peripheral-temperature calculating unit 5b calculates the deviation $\Delta t$ produced by the subtraction of the entire-area temperature $t_f$ from the proximal temperature $t_n$. Then, in step A90, the peripheral-temperature calculating unit 5b calculates the difference $\Delta T$ between the central temperature $T_c$ and the peripheral temperature To based on, for example, the correspondence illustrated in FIG. 3. In step A100, the peripheral-temperature calculating unit 5b calculates the correction amount $\Delta T'$ corresponding to the volume $V_{EX}$ of the exhaust gas estimated in step A60. In step A 110, the peripheral-temperature calculating unit 5b totalizes the central temperature $T_c$, the difference $\Delta T$, and the correction amount $\Delta T'$ calculated in steps A70, A90, and A100, respectively, and calculates the peripheral temperature To. The internal temperature of the filter 6 is determined through these steps and the pieces of information are stored in a memory device (not shown). In this step, the central temperature $T_c$ and the peripheral temperature To obtained in the previous control cycle are compared with the central temperature $T_c$ and the peripheral temperature To obtained in the current calculation cycle, respectively, and only if the value obtained in the current calculation cycle is greater than that of the previous calculation cycle, the value may be updated and stored in the memory device. Alternatively, the value obtained in all the calculation cycle may be stored in ,the memory device.

The step A120 determines a higher one of the central temperature $T_c$ and the peripheral temperature To in the processing of the flow in step A130 or later. In the step A120, if $T_o \geq T_c$ (the peripheral temperature $T_o$ is equal to or greater than the central temperature $T_c$), the program proceeds to step A130, while if To < $T_c$, then the program proceeds to step A160.

In step A130, the regeneration controlling unit 5c calculates the correction term $\Delta L$ corresponding to the peripheral temperature To. For example, for calculation performed based on the correspondence as illustrated in FIG. 4, the correction term $\Delta L$ takes a positive value if the peripheral temperature $T_o$ is less than the first temperature $T_A$, the interval between the current mandatory regeneration control and the next current mandatory regeneration control is extended. If the peripheral temperature $T_o$ is equal to or more than the first temperature $T_A$ and less than the second temperature $T_B$, the correction term $\Delta L$ is set to "$\Delta L = 0$", while if the peripheral temperature $T_o$ is equal to or more than the second temperature $T_B$, the correction term $\Delta L$ takes a negative value and the interval between the current mandatory regeneration control and the next current mandatory regeneration control is reduced.

In the successive step A140, the malfunction determining unit 5d determines whether the peripheral temperature $T_o$ is equal to or greater than the allowable temperature $T_{AMX}$. If To $\geq T_{MAX}$, the program proceeds to step A150, and the malfunction determining unit 5d determines the possibility of the meltdown or malfunction in the filter periphery 6b. The results of determination is stored in the memory device (not shown), and the control proceeds to step A190. In contrast, if $T_o < T_{MAX}$, the malfunction determining unit 5d determines no possibility of the meltdown or malfunction in the filter 6 and the program proceeds to step A190.

The steps A160 to A180 perform controls similar to that of the steps A130 to A150, using the central temperature $T_c$. That is, in step A160, the regeneration controlling unit 5c calculates the correction term $\Delta L$ corresponding to the central temperature $T_c$. The correction term $\Delta L$ takes a larger positive value with an increase in the central temperature $T_c$ or takes a larger negative value with a decrease in the central temperature $T_c$. In addition, if the central temperature $T_c$ takes a proximity value of the filter temperature $T_{TARGET}$. the absolute value of the correction term $\Delta L$ takes a small value (for example, $\Delta L = 0$).

In step A170, the malfunction determining unit 5d determines whether the central temperature $\Delta_c$ is equal to or more than the allowable temperature $T_{MAX}$. If $T_c \geq T_{MAX}$, the program proceeds to step A150 and the malfunction determining unit 5d determines the possibility of the meltdown or malfunction in the filter core 6a. The results of determination is stored in the memory device (not shown), and the control proceeds to step A190. If $T_c < T_{MAX}$, the malfunction determining unit 5d determines no possibility of the meltdown or malfunction in the filter 6 and the program proceeds to step A190.

In step A190, it is determined whether the completion condition of the mandatory regeneration control is satisfied. If the completion condition is determined to be satisfied, the program proceeds to step A200, and the flag F is set to "F = 0". In contrast, if the completion condition is not satisfied, the flag F is kept at the same state and the mandatory regeneration control is continued to the next control cycle.

[4. Operations and Advantageous Effects]

The exhaust emission control device exactly senses the temperature distribution of the exhaust gas passing through the filter 6 before the exhaust gas streams is mixed, namely the deviation from the peripheral temperature To to the central temperature $T_c$, by calculating the difference between the entire-area temperature $t_f$ reflecting the temperature of the exhaust gas passing through the filter periphery 6b and the proximal temperature $t_n$. The central temperature $T_c$ calculated by the exhaust emission control device is the maximum temperature of the filter core 6a and the peripheral temperature $T_o$ is the maximum temperature representative of the temperature of the filter periphery 6b. That is, the central temperature $T_c$ of the filter core 6a and the peripheral temperature To of the filter periphery 6b are separately and exactly sensed.

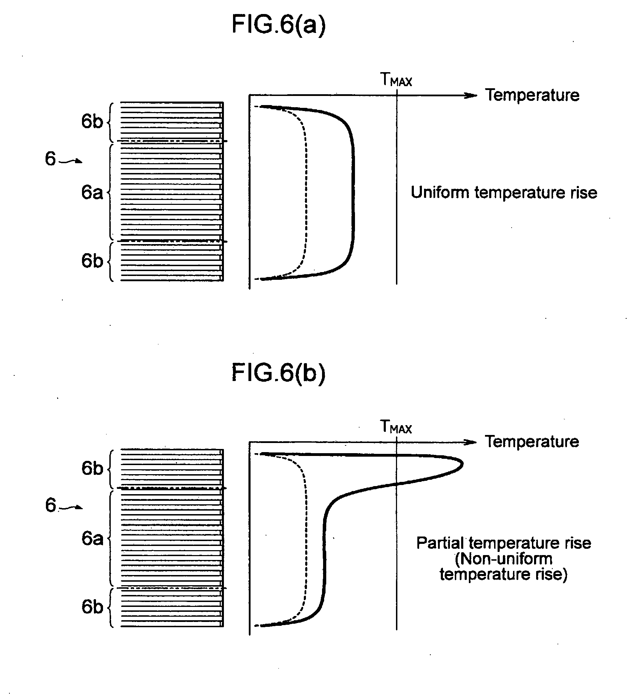

For example, FIGs. 6(a) and 6(b) illustrate an example of the temperature distribution inside the filter 6 of the DPF 1 that is mounted on a vehicle. A broken-line graph in FIG. 6(a) illustrates the temperature distribution in the cross-sectional surface in the radial direction of the filter 6, which is a typical temperature distribution with no excess accumulation or no eccentric accumulation of the PM, whereas a solid-line graph illustrates a temperature distribution after the PM is evenly and excessively accumulated in the filter 6. The solid-line graph corresponds to a broken-line graph expanded in the direction of the temperature axis. Namely, the graphs show that if the accumulation distribution of the PM is not deviated, the temperature distribution in the cross-sectional surface is kept in the radial direction of the filter 6. That is, the temperature has an approximately isotropic distribution with respect to the central axis of the filter.

Next, a solid-line graph in FIG. 6(b) illustrates an example of the temperature distribution after the PM is eccentrically accumulated in the filter periphery 6b. The graph shows that if the accumulation distribution of the PM in the filter 6 is deviated for some reason, the temperature distribution in the cross-sectional surface is distorted in the radial direction of the filter 6, and the filter periphery 6b has a significantly higher temperature than that of the filter core 6a.

Such an excess temperature rise at the filter periphery 6b cannot be detected in a manner that uses only the

9

proximal thermosensor 2, for example. A manner using only the entire-area thermosensor 3 cannot distinguish the temperature distribution in FIG. 6(a) from that of FIG. 6(b).

In contrast, the above-described exhaust emission control device can exactly estimate the maximum temperature in the filter6 and a region of the maximum temperature in the cross-sectional surface in the radial direction, and can distinguish between these temperature distributions. Accordingly, the exhaust emission control device can sense the local temperature rise at the filter periphery 6b regardless of the position, and the exhaust emission control system is highly reliable.

Since the exhaust emission control device estimates a larger difference $\Delta T$ of the peripheral temperature To with a decrease in the deviation $\Delta t$ produced by the subtraction of the entire-area temperature $t_f$ from the proximal temperature $t_n$, the exhaust emission control device can exactly estimate the maximum value of the peripheral temperature To.

Furthermore, since the exhaust emission control device estimates the volume $V_{Ex}$ of the exhaust gas passing through the filter 6 from the volume of intake air V detected by the airflow sensor 4 and increases the correction amount $\Delta T'$ with an increased volume $V_{EX}$ of the exhaust gas, the exact peripheral temperature To can be sensed in view of the heat loss corresponding to the volume $V_{EX}$ of the exhaust gas and the heat distribution in the filter 6.

The exhaust emission control device calculates the peripheral temperature To based on the central temperature $T_c$. Since the proximal thermosensor 2 is provided in proximity to the downstream end surface of the core portion 6a of the filter, a significantly accurate central temperature $T_c$ can be calculated. The calculation of the peripheral temperature To based on such an accurate value improves the accuracy of the calculation.

Furthermore, the exhaust emission control device adjusts the interval of regenerating the filter 6 using both the accurately sensed peripheral temperature To and central temperature $T_c$. The exhaust emission control device can not only detect but also suppress the excess temperature rise in the filter 6. For example, if the maximum temperature in the filter 6 is equal to or more than the second temperature $T_B$ during the first mandatory regeneration control (for example, a case illustrated in FIG. 7), the interval to the second mandatory regeneration control is decreased. As a result, even if the PM is eccentrically accumulated in the filter 6, the mandatory regeneration control is performed before the PM is excessively accumulated (in a state of a small amount of accumulated PM) and thus, the excess temperature rise can be surely prevented. Accordingly, deterioration of the filter 6 can be prevented.

The exhaust emission control device determines the possibility of the meltdown or malfunction in the filter core 6a when the central temperature $T_c$ reaches or exceeds the allowable temperature $T_{MAX}$, whereas the exhaust emission control device determines the possibility of the meltdown or malfunction in the filter periphery 6b when the peripheral temperature To reaches or exceeds the allowable temperature $T_{MAX}$. As described above, the position of the possible meltdown or the malfunction can be identified by determining the deterioration or breakdown of the filter 6 based on these two temperatures. In addition, the exhaust emission control device can exactly sense the deterioration or breakdown of the filter 6 regardless of the position of the excess temperature rise.

In the exhaust emission control device, the entire-area thermosensor 3 is provided in the vicinity of the connecting portion of the cone 1b and the downstream exhaust path 7. Thus, the temperature of the exhaust gas that is properly mixed can be detected as the entire-area temperature $t_f$ and the entire-area temperature $t_f$ can be detected with high accuracy. Furthermore, compared to a case where the entire-area thermosensor 3 is arranged downstream of the downstream exhaust path 7, the influence of the heat loss to the exterior can be decreased, and highly accurate calculation of the peripheral temperature To can be performed.

[5. Variations]

Regardless of the above-described embodiment, various modifications and combinations may occur without departing from the scope of the invention. Configurations of the embodiment may be sorted out or combined as appropriate.

For example, the entire-area thermosensor 3 may be set downstream or upstream of the position illustrated in FIG. 2 (a) . The entire-area thermosensor 3 preferably detects the exhaust temperature at any position where the first exhaust gas stream passing through the filter core 6a and the second exhaust gas stream passing through the filter periphery 6b are mixed, and the actual arrangement of the entire-area thermosensor 3 is not limited to the above-described embodiment.

In the above-described embodiment, the regeneration controlling unit 5c sets the interval to the next mandatory regeneration control during the current mandatory regeneration control. However, the time of setting the interval is not limited to the time of mandatory regeneration control. In other word, the central temperature $T_c$ and the peripheral temperature To of the filter 6 may be calculated as needed other than the time of the mandatory regeneration control (for example, at the time of the normal running of the vehicle, the continuous regeneration control, or any other situation) and the interval may be decreased or increases depending on these temperatures. Thus, the excess temperature rise of the filter 6 can be exactly prevented.

Furthermore, in the above-described embodiment, the entire-area thermosensor 3 is provided in the vicinity of the outlet of the downstream cone 1b (downstream end of the casing). A heat insulating layer or a heat-shielding surface may be provided over the entire peripheral surface of the downstream cone 1b for eliminating the influence of the heat loss to the exterior. In this case, the heat loss to the exterior can be reduced and highly accurate detection of the entire-area temperature $t_f$ can be performed. This improves the accuracy of the calculation of the peripheral temperature To and surely prevents the deterioration of the filter 6.

Various modifications are applicable to the shape of the downstream cone 1b (shape of the casing of the DPF1) . In order to efficiently mix the exhaust gas streams after passing through the filter 6, the flow path and the wall may be shaped to control or direct the flow of the exhaust gas. Application of such a structure to the above-described embodiment can further improve the accuracy of calculating the peripheral temperature To and surely prevents the deterioration of the filter 6.

In the above-described embodiment, the difference between the proximal temperature $t_n$ and the entire-area temperature $t_f$ are calculated, and then the difference $\Delta T$ between the central temperature $T_c$ and the peripheral temperature $T_o$ is calculated from the calculated difference serving as an argument. Instead of or in addition to this configuration, the ratio of the proximal temperature $t_n$ to the entire-area temperature $t_f$ may be used. For example, the difference $\Delta T$ may be increased with an increased ratio k ($k = t_f / t_n$) of the entire-area temperature $t_f$ to the proximal temperature $t_n$. In such a control operation, the same advantageous effects as the above-described embodiment can be achieved.

In the above-described embodiment, the difference $\Delta T$ is calculated using the correspondence illustrated in FIG. 3. Various calculating means may also be applicable. For example, by previously sensing the correlation between the deviation $\Delta t$ and the difference $\Delta T$, or the correlation among the deviation $\Delta t$, the volume $V_{EX}$ of the exhaust gas, and the difference $\Delta T$, through experiments or any other means, these correlations may be stored in the control device 5 forming a map or a model.

Furthermore, in the above-described embodiment, the volume $V_{EX}$ of the exhaust gas is calculated using the results detected by the airflow sensor 4, the volume $V_{EX}$ of the exhaust gas may be directly detected by a flow volume sensor provided in the exhaust path 9.

The engine 10 can have any combustion system and the above-described exhaust emission control device can be applied to both an exhaust system of a diesel engine and an exhaust system of a gasoline engine. For example, the configuration of an actual engine, such as a throttle valve 11, spark plugs (not shown), and the disposition of the injector (not shown) can be appropriately set or changed.

## REFERENCE SIGNS LIST

    1 DPF
1a cylindrical portion
1b truncated cones
1c support member
2 proximal thermosensor
3 entire-area thermosensor
4 airflow sensor
5 control device (calculation means)
5a central-temperature calculating unit (central-temperature calculating means)
5b peripheral-temperature calculating unit (peripheral-temperature calculating means, exhaust flow calculating means)
5c regeneration controlling unit (regeneration controlling means)
5d malfunction determining unit (malfunction determining means)
6 filter
6a filter core (core portion)
6b filter periphery (peripheral portion)
7 downstream exhaust path

The invention thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. An exhaust emission control device, comprising:

    a filter (6) provided in an exhaust path of an engine and collecting particulate matter in exhaust gas;
    a downstream exhaust path (7) provided downstream of the filter (6);
    a proximal thermosensor (2) provided in proximity to a downstream end surface of a core portion (6a) of a cross-sectional surface in a radial direction of the filter (6) and that detects a proximal temperature ($t_n$) of the exhaust gas that passed through the core portion (6a) ; the exhaust emission control device being **characterised in that** it further comprises:
    an entire-area thermosensor (3) provided in a center of the downstream exhaust path (7) in a cross-section in a radial direction of the downstream exhaust path (7) and that detects an entire-area temperature ($t_f$) of a mixture of a first exhaust gas stream that passed through a peripheral portion (6b) and a second exhaust gas stream that passed through a core portion (6a) in a cross-sectional surface in a radial direction of the filter (6); and
    calculating means (5) that calculates a peripheral temperature ($T_o$) of the peripheral portion (6b) of the filter (6), based on the proximal temperature ($t_n$) detected by the proximal thermosensor (2) and the entire-area temperature ($t_f$) detected by the entire-area thermosensor (3).

2. The exhaust emission control device according to.Claim 1, wherein
    the calculatingmeans (5) calculates a deviation ($\Delta t$) which is obtained by subtracting the entire-area temperature ($t_f$) from the proximal temperature ($t_n$),
    the calculating means (5) calculates a difference ($\Delta T$) based on a correspondence between the deviation ($\Delta t$) and the difference ($\Delta T$) wherein the difference ($\Delta T$) increases with a decrease in the deviation ($\Delta t$), and
    the calculating means (5) calculates the peripheral temperature ($T_o$) based on the difference ($\Delta T$).

3. The exhaust emission control device according to Claim 1 or 2, further comprising
    exhaust flow calculating means (5b) that calculates the volume of the exhaust gas ($V_{EX}$) passing through the exhaust path, wherein
    the calculating means (5) calculates the peripheral temperature ($T_o$) higher in proportion as the volume of the flowing exhaust gas ($V_{EX}$) calculated by the exhaust flow calculating means (5b) is larger.

4. The exhaust emission control device according to any one of Claims 1 through 3, the calculating means (5) including:

    central-temperature calculating means (5a) that calculates a central temperature ($T_c$) of the core portion (6a) of the filter (6) based on the proximal temperature ($t_n$);
    peripheral temperature calculating means (5b) that calculates the peripheral temperature ($T_o$) based on the central temperature ($T_c$), the proximal temperature ($t_n$), and the entire-area temperature ($t_f$); and
    regeneration controlling means (5c) that sets an interval for regenerating the filter (6) based on a higher temperature of the central temperature ($T_c$) calculated by the central-temperature calculating means (5a) and the peripheral temperature ($T_o$) calculated by the peripheral-temperature calculating means (5b).

5. The exhaust emission control device according to Claim 4, further comprising:

    malfunction determining means that determines malfunction occurring at the core portion (6a) if the central temperature ($T_c$) calculated by the central temperature calculating means (5a) exceeds a predetermined temperature and malfunction occurring at the peripheral portion (6b) if the peripheral temperature ($T_O$) calculated by the peripheral-temperature calculating means (5b) exceeds a predetermined temperature.

6. The exhaust emission control device according to any one of Claims 1 through 5, further comprising:

    a truncated cone (1b) provided on a downstream end of a casing accommodating the filter (6), arranged conversely toward a downstream side and connected to the downstream exhaust path (7), wherein
    the entire-area thermosensor (3) is disposed in the center in a cross-section in a radial direction of the downstream exhaust path (7) in the vicinity of a connecting portion of the truncated cone (1b) and the downstream exhaust path (7).

7. The exhaust emission control device according to any one of Claims 1 through 6, wherein
    the calculating means (5) calculates a ratio (k) of the proximal temperature ($t_n$) to the entire-area temperature ($t_f$),

the calculating means (5) calculates a difference ($\Delta T$) based on a correspondence between the ratio (k) and the difference ($\Delta T$) wherein the difference ($\Delta T$) increases with an increase in the ratio (k), and
the calculating means (5) calculates the peripheral temperature ($T_O$) based on the difference ($\Delta T$).

**Patentansprüche**

1. Abgasreinigungsvorrichtung mit:

   einem Filter (6), der in einem Abgasweg eines Motors vorgesehen ist und Feststoffteilchen im Abgas sammelt;
   einem stromabwärts gelegenen Abgasweg (7), der stromabwärts vom Filter (6) vorgesehen ist;
   einem proximalen Temperaturfühler (2), der in der Nähe einer stromabwärts gelegenen Endfläche eines Kernabschnitts (6a) einer Querschnittsfläche in einer radialen Richtung des Filters (6) vorgesehen ist und der eine proximale Temperatur ($t_n$) des Abgases ermittelt, das durch den Kernabschnitt (6a) gegangen ist;
   wobei die Abgasreinigungsvorrichtung **dadurch gekennzeichnet ist, dass** sie ferner auf weist:

   einen Gesamtbereichstemperaturfühler (3), der in einer Mitte des stromabwärts gelegenen Abgaswegs (7) in einem Querschnitt in einer radialen Richtung des stromabwärts gelegenen Abgaswegs (7) vorgesehen ist und der eine Gesamtbereichstemperatur ($t_f$) einer Mischung eines ersten Abgasstroms, der durch einen peripheren Abschnitt (6b) gegangen ist, und eines zweiten Abgasstroms ermittelt, der durch einen Kernabschnitt (6a) in einer Querschnittsfläche in einer radialen Richtung des Filters (6) gegangen ist; und
   eine Berechnungseinrichtung (5), die beruhend auf der durch den proximalen Temperaturfühler (2) ermittelten proximalen Temperatur ($t_n$) und der durch den Gesamtbereichstemperaturfühler (3) ermittelten Gesamtbereichstemperatur ($t_f$) eine periphere Temperatur ($T_O$) des peripheren Abschnitts (6b) des Filters (6) berechnet.

2. Abgasreinigungsvorrichtung nach Anspruch 1, wobei
   die Berechnungseinrichtung (5) eine Abweichung ($\Delta t$) berechnet, die durch Subtrahieren der Gesamtbereichstemperatur ($t_f$) von der proximalen Temperatur ($t_n$) erhalten wird,
   die Berechnungseinrichtung (5) eine Differenz ($\Delta T$) beruhend auf einer Entsprechung zwischen der Abweichung ($\Delta t$) und der Differenz ($\Delta T$) berechnet, wobei die Differenz ($\Delta T$) mit einer Abnahme der Abweichung ($\Delta t$) zunimmt, und
   die Berechnungseinrichtung (5) die periphere Temperatur ($T_O$) beruhend auf der Differenz ($\Delta T$) berechnet.

3. Abgasreinigungsvorrichtung nach Anspruch 1 oder 2, die ferner aufweist
   eine Abgasstromberechnungseinrichtung (5b), die das Volumen des Abgases ($V_{EX}$) berechnet, das durch den Abgasweg geht, wobei
   die Berechnungseinrichtung (5) die periphere Temperatur ($T_O$) proportional höher berechnet, wenn das Volumen des durch die Abgasstromberechnungseinrichtung (5b) berechneten strömenden Abgases ($V_{EX}$) größer ist.

4. Abgasreinigungsvorrichtung nach einem der Ansprüche 1 bis 3, wobei die Berechnungseinrichtung (5) aufweist:

   ein Zentraltemperaturberechnungseinrichtung (5a), die eine Zentraltemperatur ($T_c$) des Kernabschnitts (6a) des Filters (6) beruhend auf der proximalen Temperatur ($t_n$) berechnet;
   eine periphere Temperaturberechnungseinrichtung (5b), die die periphere Temperatur ($T_O$) beruhend auf der Zentraltemperatur ($T_c$), der proximalen Temperatur ($t_n$) und der Gesamtbereichstemperatur ($t_f$) berechnet; und
   eine Regenerationssteuereinrichtung (5c), die ein Intervall zur Regeneration des Filters (6) beruhend auf einer höheren Temperatur der durch die Zentraltemperaturberechnungseinrichtung (5a) berechneten Zentraltemperatur ($T_c$) und der durch die periphere Temperaturberechnungseinrichtung (5b) berechnete periphere Temperatur ($T_O$) festlegt.

5. Abgasreinigungsvorrichtung nach Anspruch 4, die ferner aufweist:

   eine Fehlfunktionsfeststellungseinrichtung, die eine Fehlfunktion feststellt, die im Kernabschnitt (6a) auftritt, wenn die durch die Zentraltemperaturberechnungseinrichtung (5a) berechnete Zentraltemperatur ($T_c$) eine vorgegebene Temperatur überschreitet,
   und eine Fehlfunktion feststellt, die im peripheren Abschnitt (6b) auftritt, wenn die durch die periphere Temperaturberechnungseinrichtung (5b) berechnete periphere Temperatur ($T_O$) eine vorgegebene Temperatur überschreitet.

**6.** Abgasreinigungsvorrichtung nach einem der Ansprüche 1 bis 5, die ferner aufweist:

einen Kegelstumpf (1b), der an einem stromabwärts gelegenen Ende eines Gehäuses vorgesehen ist, das den Filter (6) beherbergt, und umgekehrt zu einer stromabwärts gelegenen Seite angeordnet und mit dem stromabwärts gelegenen Abgasweg (7) verbunden ist, wobei der Gesamtbereichstemperaturfühler (3) in der Mitte eines Querschnitts in einer radialen Richtung des stromabwärts gelegenen Abgaswegs (7) in der Nähe eines Verbindungsabschnitts des Kegelstumpfs (1b) und des stromabwärts gelegenen Abgaswegs (7) angeordnet ist.

**7.** Abgasreinigungsvorrichtung nach einem der Ansprüche 1 bis 6, wobei
die Berechnungseinrichtung (5) ein Verhältnis (k) der proximalen Temperatur ($t_n$) zur Gesamtbereichstemperatur ($t_f$) berechnet,
die Berechnungseinrichtung (5) eine Differenz ($\Delta T$) beruhend auf einer Entsprechung zwischen dem Verhältnis (k) und der Differenz ($\Delta T$) berechnet, wobei die Differenz ($\Delta T$) mit einer Zunahme des Verhältnisses (k) zunimmt, und
die Berechnungseinrichtung (5) die periphere Temperatur ($T_o$) beruhend auf der Differenz ($\Delta T$) berechnet.


**Revendications**

**1.** Dispositif de contrôle d'émissions d'échappement, comprenant :

un filtre (6) prévu dans une conduite d'échappement d'un moteur et retenant des particules de gaz d'échappement ;
une conduite d'échappement en aval (7) prévue en aval du filtre (6) ;
un capteur thermique proximal (2) prévu à proximité d'une surface d'extrémité aval d'une partie centrale (6a) d'une surface de section transversale dans la direction radiale du filtre (6) et détectant une température proximale ($t_n$) du gaz d'échappement ayant traversé la partie centrale (6a) ; ledit dispositif de contrôle d'émissions d'échappement étant **caractérisé en ce qu'**il comprend en outre :

un capteur thermique de surface globale (3) prévu au centre de la conduite d'échappement en aval (7) en section transversale dans la direction radiale de la conduite d'échappement en aval (7) et détectant une température de surface globale ($t_f$) d'un mélange d'un premier flux de gaz d'échappement ayant traversé une partie périphérique (6b) et d'un deuxième flux de gaz d'échappement ayant traversé une partie centrale (6a) d'une surface de section transversale dans la direction radiale du filtre (6) ; et
un moyen de calcul (5) calculant une température périphérique ($T_o$) de la partie périphérique (6b) du filtre (6), sur la base de la température proximale ($t_n$) détectée par le capteur thermique proximal (2) et de la température de surface globale ($t_f$) détectée par le capteur thermique de surface globale (3).

**2.** Dispositif de contrôle d'émissions d'échappement selon la revendication 1, où
le moyen de calcul (5) calcule un écart ($\Delta t$) obtenu en soustrayant la température de surface globale ($t_f$) de la température proximale ($t_n$),
le moyen de calcul (5) calcule une différence ($\Delta T$) sur la base d'une correspondance entre l'écart ($\Delta t$) et la différence ($\Delta T$), la différence ($\Delta T$) augmentant à mesure que l'écart ($\Delta t$) diminue, et où
le moyen de calcul (5) calcule la température périphérique ($T_o$) sur la base de la différence ($\Delta T$).

**3.** Dispositif de contrôle d'émissions d'échappement selon la revendication 1 ou la revendication 2, comprenant en outre un moyen de calcul de flux d'échappement (5b) calculant le volume de gaz d'échappement ($V_{EX}$) passant dans la conduite d'échappement,
le moyen de calcul (5) calculant la température périphérique ($T_o$) à une valeur supérieure en fonction de l'augmentation de volume du gaz d'échappement s'écoulant ($V_{EX}$) calculé par le moyen de calcul de flux d'échappement (5b).

**4.** Dispositif de contrôle d'émissions d'échappement selon l'une des revendications 1 à 3, où le moyen de calcul (5) comprend :

un moyen de calcul de température centrale (5a) calculant une température centrale ($T_c$) de la partie centrale (6a) du filtre (6) sur la base de la température proximale ($t_n$) ;
un moyen de calcul de température périphérique (5b) calculant la température périphérique ($T_o$) sur la base de la température centrale ($T_c$), de la température proximale ($t_n$) et de la température de surface globale ($t_f$) ; et

un moyen de commande de régénération (5c) fixant un intervalle de régénération du filtre (6) sur la base d'une température supérieure de la température centrale ($T_c$) calculée par le moyen de calcul de température centrale (5a) et de la température périphérique ($T_o$) calculée par le moyen de calcul de température périphérique (5b).

5.  Dispositif de contrôle d'émissions d'échappement selon la revendication 4, comprenant en outre :

un moyen de détection de dysfonctionnement détectant un dysfonctionnement survenant sur la partie centrale (6a) si la température centrale ($T_c$) calculée par le moyen de calcul de température centrale (5a) dépasse une température prédéfinie et un dysfonctionnement survenant sur la partie périphérique (6b) si la température périphérique ($T_o$) calculée par le moyen de calcul de température périphérique (5b) dépasse une température prédéfinie.

6.  Dispositif de contrôle d'émissions d'échappement selon l'une des revendications 1 à 5, comprenant en outre :

un cône tronqué (1b) prévu à une extrémité aval d'un carter contenant le filtre (6), retourné vers le côté aval et raccordé à la conduite d'échappement en aval (7),
le capteur thermique de surface globale (3) étant disposé au centre en section transversale dans la direction radiale de la conduite d'échappement en aval (7), à proximité d'une section de connexion du cône tronqué (1b) et de la conduite d'échappement en aval (7).

7.  Dispositif de contrôle d'émissions d'échappement selon l'une des revendications 1 à 6, où
le moyen de calcul (5) calcule un rapport (k) entre la température proximale ($t_n$) et la température de surface globale ($t_f$) ;
le moyen de calcul (5) calcule une différence ($\Delta T$) sur la base d'une correspondance entre le rapport (k) et la différence ($\Delta T$), la différence ($\Delta T$) augmentant à mesure que le rapport (k) augmente, et où
le moyen de calcul (5) calcule la température périphérique ($T_o$) sur la base de la différence ($\Delta T$).

# FIG.1

## FIG.2(a)

## FIG.2(b)

## FIG.3

Difference ΔT
(of peripheral temperature $T_O$)

(+)

B

0

A

$\Delta t$ (=$t_n$-$t_f$)

$\Delta T'$

(−)

Correction amount

## FIG.4

Correction term $\Delta L$
(of mandatory regeneration interval)

(+)

$T_A$

$T_B$

T
Temperature

$T_{TARGET}$

(−)

# FIG.5

```
                    ( Start )
                        │
         A10 ─┐  ┌─────────────────────┐
              └──│ Read various parameter│
                 └─────────────────────┘
                        │
                   ╱─────────────╲      No
              ┌───< Is flag set to F=1 ? >──────────────────────┐
         A20 ─┘    ╲─────────────╱                              │
                        │ Yes                                   │
         A50 ─┐  ┌──────────────────────────────┐              │
              └──│ Perform mandatory regeneration│         ╱─────────────────────╲
                 │ control                       │        ╱  Is start condition of ╲   No
                 └──────────────────────────────┘       <   mandatory regeneration  >───┐
                        │                                 ╲  control satisfied ?      ╱  │
         A60 ─┐  ┌──────────────────────────────┐          ╲(Running distance L≧L₀+ΔL?)╱ │
              └──│ Estimate volume Vₑₓ of exhaust│       A30 ─┘      │ Yes               │
                 │ gas from volume V of intake air│             ┌──────────────┐        │
                 └──────────────────────────────┘              │ Set flag F=1 │         │
                        │                               A40 ─┘ └──────────────┘         │
         A70 ─┐  ┌──────────────────────────────┐                  │◄─────────────────┘
              └──│ Estimate central temperature Tc│                 │
                 │ from proximal temperature tₙ   │              ( Return )
                 └──────────────────────────────┘
                        │
         A80 ─┐  ┌──────────────────────────────┐
              └──│ Calculate deviation Δt         │
                 │ from proximal temperature tₙ and│
                 │ entire-area temperature tf     │
                 └──────────────────────────────┘
                        │
         A90 ─┐  ┌──────────────────────────────┐
              └──│ Estimate difference ΔT         │
                 │ from deviation Δt              │
                 └──────────────────────────────┘
                        │
        A100 ─┐  ┌──────────────────────────────┐
              └──│ Estimate correction amount ΔT' │
                 │ from volume Vₑₓ of exhaust gas │
                 └──────────────────────────────┘
                        │
              ┌──────────────────────────────────┐
              │ Calculate peripheral temperature To│
              │ from central temperature Tc, diff- │
              │ erence ΔT and correction amount ΔT'│
              └──────────────────────────────────┘
        A110 ─┘         │
                   ╱─────────╲    No
              ┌───< To ≧ Tc ? >──────────────────────────────┐
        A120 ─┘    ╲─────────╱                                │
                        │ Yes                                 │
        A130 ─┐  ┌──────────────────────┐      ┌──────────────────────┐
              └──│ Calculate correction  │      │ Calculate correction  │
                 │ term ΔL from peripheral│     │ term ΔL from central   │
                 │ temperature To         │      │ temperature Tc         │
                 └──────────────────────┘  A160─┘└──────────────────────┘
                        │                                │
                   ╱─────────╲   No                 ╱─────────╲   No
              ┌───< To ≧ Tmax ? >──┐           ┌───< Tc ≧ Tmax ? >──┐
        A140 ─┘    ╲─────────╱     │     A170 ─┘    ╲─────────╱     │
                        │ Yes      │                     │ Yes      │
                 ┌──────────────┐  │              ┌──────────────┐  │
                 │ There is a    │  │              │ There is a    │  │
                 │ possibility of │  │             │ possibility of │  │
                 │ meltdown in    │  │             │ meltdown in    │  │
                 │ peripheral     │  │             │ core portion   │  │
                 │ portion        │  │             └──────────────┘  │
                 └──────────────┘  │        A180 ─┘    │             │
        A150 ─┘         │◄─────────┴──────────────────┴─────────────┘
                        │◄────────────────────────────────┐
                   ╱──────────────────╲    No             │
              ┌───< Is completion condition >─────────────┤
              │    < of mandatory regenera- >             │
              │     ╲ control satisfied ?   ╱             │
        A190 ─┘      ╲──────────────────╱                 │
                        │ Yes                             │
                 ┌──────────────┐                         │
                 │ Set flag F=0 │                         │
                 └──────────────┘                         │
        A200 ─┘         │◄───────────────────────────────┘
                        │
                   ( Return )
```

# FIG.6(a)

T_MAX

Temperature

Uniform temperature rise

6b
6
6a
6b

# FIG.6(b)

T_MAX

Temperature

Partial temperature rise
(Non-uniform
temperature rise)

6b
6
6a
6b

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3884947 B
- JP 2007332911 A
- EP 2034145 A1